(19) **Europäisches Patentamt / European Patent Office / Office européen des brevets**

(11) **EP 3 762 347 B1**

(12) **FASCICULE DE BREVET EUROPEEN**

(45) Date de publication et mention de la délivrance du brevet:
**15.10.2025 Bulletin 2025/42**

(21) Numéro de dépôt: **18713311.1**

(22) Date de dépôt: **05.03.2018**

(51) Classification Internationale des Brevets (IPC):
**C04B 35/80** (2006.01)   **C22C 47/08** (2006.01)
**F27B 14/08** (2006.01)   **F27B 14/10** (2006.01)
**F27B 14/20** (2006.01)   **C04B 35/628** (2006.01)
**C04B 35/573** (2006.01)   **F27B 14/06** (2006.01)
**F27D 11/06** (2006.01)

(52) Classification Coopérative des Brevets (CPC):
**C04B 35/573; C04B 35/62868; C04B 35/62873;
C04B 35/62894; C04B 35/80; C22C 47/08;
F27B 14/06; F27B 14/061; F27D 11/06;**
C04B 2235/3804; C04B 2235/3821;
C04B 2235/3826; C04B 2235/386;
C04B 2235/3873; C04B 2235/422;     (Cont.)

(86) Numéro de dépôt international:
**PCT/FR2018/050494**

(87) Numéro de publication internationale:
**WO 2018/162829 (13.09.2018 Gazette 2018/37)**

(54) **PROCEDE D'INFILTRATION D'UNE PREFORME POREUSE**

VERFAHREN ZUR INFILTRATION EINES PORÖSEN VORFÖRMLINGS

PROCESS FOR THE INFILTRATION  OF A POROUS PREFORM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **08.03.2017  FR 1700228**

(43) Date de publication de la demande:
**13.01.2021  Bulletin 2021/02**

(73) Titulaires:
• **Safran Ceramics**
  **33185 Le Haillan (FR)**
• **Centre National de la Recherche Scientifique**
  **75016 Paris (FR)**

(72) Inventeurs:
• **MARCHAIS, Alexandre, Michaël**
  **77550 Moissy-Cramayel Cedex (FR)**
• **VICIEN, Denis, Yves**
  **77550 Moissy-Cramayel Cedex (FR)**
• **MENDEZ, Emilie, Chantal, Gisèle**
  **77550 Moissy-Cramayel Cedex (FR)**
• **ROGER, Jérôme, Olivier, Pascal**
  **33600 Pessac (FR)**

(74) Mandataire: **Cabinet Beau de Loménie**
  **103, rue de Grenelle**
  **75340 Paris Cedex 07 (FR)**

(56) Documents cités:
**EP-A1- 1 683 771     WO-A1-2016/001343**

• **ALEXANDRE MARCHAIS: "Alexandre Marchais , Etude des mécanismes de montée capillaire du silicium liquide au sein d'une préforme en carbure de silicium", 26 February 2016 (2016-02-26), Talence, France, XP055427188, Retrieved from the Internet <URL:http://www.theses.fr/2016BORD0025#> [retrieved on 20171121]**

• MARCHAIS A ET AL: "Capillary infiltration of hexadecane in packed SiC powder and in SiC/SiC preforms: Pore description and calculation of molten Si infiltration", CERAMICS INTERNATIONAL, ELSEVIER, AMSTERDAM, NL, vol. 42, no. 6, 12 February 2016 (2016-02-12), pages 7774 - 7780, XP029461743, ISSN: 0272-8842, DOI: 10.1016/J.CERAMINT.2016.01.203

• KUMAR S ET AL: "Capillary infiltration studies of liquids into 3D-stitched C-C preforms", JOURNAL OF THE EUROPEAN CERAMIC SOCIETY, ELSEVIER SCIENCE PUBLISHERS, BARKING, ESSEX, GB, vol. 29, no. 12, 1 September 2009 (2009-09-01), pages 2651 - 2657, XP026338258, ISSN: 0955-2219, [retrieved on 20090416], DOI: 10.1016/J.JEURCERAMSOC.2009.03.006

• GREBENYUK Y ET AL: "Wicking into porous polymer-derived ceramic monoliths fabricated by freeze-casting", JOURNAL OF THE EUROPEAN CERAMIC SOCIETY, ELSEVIER SCIENCE PUBLISHERS, BARKING, ESSEX, GB, vol. 37, no. 5, 20 December 2016 (2016-12-20), pages 1993 - 2000, XP029907847, ISSN: 0955-2219, DOI: 10.1016/J.JEURCERAMSOC.2016.11.049

(52) Classification Coopérative des Brevets (CPC):
(Cont.)C04B 2235/5244; C04B 2235/5248; C04B 2235/5252; C04B 2235/5256; C04B 2235/5436; C04B 2235/5445; C04B 2235/608; C04B 2235/616; C04B 2235/723; F27B 14/08

## Description

Arrière-plan de l'invention

La présente invention se rapporte au domaine général des procédés de fabrication de pièces en matériau composite à matrice céramique (CMC) dans lesquels on infiltre une préforme poreuse par un métal fondu. La présente invention vise plus particulièrement un procédé d'infiltration d'une préforme poreuse et un four pour la mise en œuvre de ce procédé.

Différents procédés de fabrication de pièces en matériau composite à matrice céramique sont connus. On connaît le procédé dit « Pre-preg » dans lequel des fils pré imprégnés de résine précurseur de carbone sont mis sous la forme de nappes qui sont ensuite drapées pour obtenir une préforme fibreuse. La préforme fibreuse est moulée, cuite, et enfin infiltrée par un métal (ou un alliage métallique) à l'état liquide (technique d'infiltration à l'état fondu : « MI » pour « Melt-Infiltration »). On connaît encore le procédé dit « Slurry-Cast » dans lequel on peut dans un premier temps densifier partiellement une préforme fibreuse tissée par voie gazeuse, par exemple par infiltration chimique en phase gazeuse (CVI), puis introduire une poudre céramique dans la préforme pré densifiée, par exemple par immersion dans une barbotine adéquate, et enfin infiltrer la préforme par un métal fondu (MI) de façon à finaliser la densification de la pièce. Dans l'un ou l'autre des procédés présentés, l'infiltration de la préforme peut être réactive, c'est-à-dire que le métal fondu peut réagir avec une phase de matrice déjà présente dans la préforme.

Traditionnellement, l'infiltration de la préforme poreuse par le métal fondu est réalisée à l'aide d'un drain, le drain pouvant être par exemple un tissu, un feutre, un mat, ou tout autre matériau poreux. Plus précisément, le drain est mis au contact du métal fondu d'une part, et de la préforme à infiltrer d'autre part, le métal fondu étant transféré à la préforme et infiltré dans celle-ci par capillarité à l'aide du drain. Le métal fondu est généralement présent dans un creuset. L'ensemble comprenant le creuset, le drain et la préforme doit être disposé dans un four adéquat. L'emploi d'un drain n'est toutefois pas aisé et peut présenter des inconvénients. En effet, selon le métal et le type de préforme envisagés, il faut trouver le drain qui présente les bonnes propriétés capillaires et de mouillabilité pour infiltrer efficacement la préforme. En outre, lors de la montée en température du four, le métal peut fondre partiellement et commencer à infiltrer le drain puis la préforme, ce qui peut conduire à une densification inhomogène.

Il serait donc souhaitable de disposer d'un procédé d'infiltration d'une préforme poreuse par un métal fondu qui permette de s'affranchir des inconvénients liés à l'utilisation d'un drain.

EP 1 683 771 A1 décrit la fabrication de CMC à partir d'une préforme tissée en fibres de SiC revêtues d'une interphase. La préforme est d'abord infiltrée avec une barbotine comprenant des particules de SiC puis introduite dans un four où elle est abaissée pour tremper dans un creuset de Si fondu pendant une durée prédéterminée, et enfin relevée hors du Si fondu. Il est précisé qu'au lieu de mesurer le temps, on peut réaliser un suivi in situ de la masse en suspendant la préforme à une cellule de charge.

Objet et résumé de l'invention

La présente invention a donc pour but de permettre de s'affranchir de l'utilisation d'un drain dans un procédé du type MI en proposant un procédé d'infiltration d'une préforme poreuse par un métal fondu, l'infiltration étant réalisée dans un four comprenant un creuset dans lequel est présent le métal fondu, le procédé comprenant :

-    la mise en contact de la préforme poreuse avec le métal fondu présent dans le creuset,
-    l'infiltration de la préforme poreuse par le métal fondu par capillarité,
-    la mesure de la masse de la préforme poreuse au cours de l'infiltration, et
-    le dégagement de la préforme poreuse du métal fondu lorsque la masse de la préforme mesurée atteint une valeur prédéterminée,

le procédé comprenant en outre, avant mise en contact de la préforme poreuse avec le métal fondu, un traitement thermique de la préforme poreuse à une température supérieure ou égale à la température de fusion du métal.

Par « mise en contact de la préforme poreuse avec le métal fondu », on entend notamment que la préforme poreuse présente une face en regard du creuset qui entre en contact avec la surface libre du métal fondu dans le creuset. En d'autres termes, lors de la mise en contact de la préforme poreuse avec le métal fondu, une face de la préforme en regard du creuset affleure la surface libre du métal fondu. Lors de l'infiltration, le métal fondu peut infiltrer la préforme par capillarité à partir de sa face affleurant le métal fondu. Pendant l'infiltration, du métal fondu traverse la face de la préforme au contact du métal fondu et remplit progressivement la porosité libre de la préforme poreuse. Après « dégagement de la préforme poreuse du métal fondu », la face introduite précédemment n'est plus au contact du métal fondu présent dans le creuset, et plus généralement la préforme n'est plus au contact du métal fondu présent dans le creuset.

Ainsi, le procédé selon l'invention permet d'infiltrer une préforme par un métal fondu en s'affranchissant de l'utilisation d'un drain. En effet, on peut désormais mettre directement au contact la préforme du bain de métal fondu, qui est alors infiltrée par capillarité directement depuis ce bain. La surveillance de la masse par au moins une mesure au cours de l'infiltration permet de déterminer aisément l'avancée de l'infiltration pour dégager rapidement la préforme du métal fondu dès que l'infiltration est terminée ou avancée à un stade prédéfini. En particulier, la valeur prédéterminée de masse peut être une valeur de masse correspondant à une infiltration complète de la préforme poreuse, ou, en variante, à une infiltration partielle.

De façon dynamique, dans le cas où l'on cherche à infiltrer complètement la préforme poreuse, on peut conditionner le dégagement de la préforme poreuse du métal fondu à un changement de comportement de la masse au cours du temps. En particulier, au cours de l'infiltration, le passage d'une masse croissante au cours du temps à une masse constante au cours du temps (valeur prédéterminée atteinte) signifie que l'infiltration est terminée et que la préforme peut être dégagée du métal fondu.

Le procédé selon l'invention présente d'autres avantages. En effet, on peut désormais imposer dans le four une température au moins égale à la température de fusion du métal avant de commencer l'infiltration de la préforme, ce qui permet de faire fondre complètement le métal présent dans le creuset et de l'homogénéiser. Aussi, le risque que la préforme soit prise au piège dans le métal fondu une fois l'infiltration terminée est évité car elle est retirée immédiatement après l'achèvement de l'infiltration. En outre, le procédé selon l'invention permet un suivi précis et facile de l'infiltration par une simple mesure de masse, qui n'était pas possible dans les procédés mettant en œuvre un drain de l'art antérieur. Enfin, le procédé peut être entièrement automatisé, rendant l'infiltration encore plus reproductible.

Il est généralement prévu, afin d'augmenter la mouillabilité de la préforme vis-à-vis du métal fondu et améliorer ainsi l'infiltration, de procéder à un traitement thermique de désoxydation de la préforme. Par exemple, dans une préforme constituée de fibres recouvertes d'une couche de carbure de silicium (SiC), une couche de silice ($SiO_2$) se forme généralement en surface, ce qui réduit la mouillabilité de la préforme vis-à-vis d'un métal fondu comme du silicium ou l'un de ses alliages. Dans les procédés de l'art antérieur mettant en œuvre un drain, la désoxydation et l'infiltration sont réalisées successivement dans le même four en imposant différents paliers de températures correspondant chacun à l'une de ces étapes. Ainsi, pour l'étape de désoxydation de la préforme, le four est d'abord chauffé à une température qui doit être inférieure à la température de fusion du métal pour éviter que le métal ne fonde et commence à infiltrer la préforme, déjà au contact du drain. En revanche, en utilisant un procédé selon l'invention, on peut s'affranchir de la limite de température pour le palier de désoxydation puisque le drain n'est plus nécessaire. En effet, le métal fondu n'est pas encore au contact de la préforme durant cette étape.

Ainsi, le procédé selon l'invention comprend avant mise en contact de la préforme poreuse avec le métal fondu, un traitement thermique de la préforme poreuse à une température supérieure ou égale à la température de fusion du métal. Or, les inventeurs ont observé que la désoxydation de la préforme est nettement améliorée lorsqu'elle est réalisée à une température supérieure à la température de fusion du métal d'infiltration. Ce traitement thermique permet donc d'améliorer la désoxydation de la préforme, ce qui conduit à une meilleure infiltration de la préforme par le métal fondu et de meilleures propriétés mécaniques pour la pièce finale. Ce traitement thermique est un traitement thermique de désoxydation de la préforme poreuse. La durée de ce traitement thermique de désoxydation peut être supérieure ou égale à 15 minutes, par exemple être comprise entre 15 minutes et 5 heures. La durée du traitement thermique de désoxydation peut être adaptée à la taille de la préforme poreuse à traiter.

Dans un exemple de réalisation, le procédé peut comprendre, au cours de l'infiltration, la régulation de la position relative du creuset par rapport à la préforme pour garder la préforme au contact du métal fondu. Cette régulation peut être avantageuse lorsque les dimensions du creuset et de la préforme sont telles que le niveau de métal fondu à l'intérieur du creuset peut varier au cours de l'infiltration. La régulation de la position relative du creuset peut ainsi comprendre la mesure de la distance séparant la préforme de la surface libre du métal fondu présent dans le creuset, et l'ajustement de la distance entre cette surface libre et la préforme. L'ajustement de la distance entre la surface libre et la préforme peut être réalisé par déplacement de la préforme ou du creuset l'un par rapport à l'autre. Bien entendu, lorsque le creuset présente des dimensions telles que le niveau de métal fondu dans le creuset ne varie sensiblement pas pendant l'infiltration, cette régulation n'est pas nécessaire.

Dans un exemple de réalisation, la préforme poreuse peut être une préforme fibreuse obtenue par tissage de fils céramiques.

En particulier, dans un exemple de réalisation, les fils peuvent être en carbure de silicium. Par exemple, les fils peuvent être en carbure de silicium présentant une teneur en oxygène inférieure ou égale à 1% en pourcentage atomique.

Dans un exemple de réalisation, le métal fondu peut être du silicium ou un alliage de silicium.

Dans un exemple de réalisation, avant mise en contact de la préforme poreuse avec le métal fondu, la préforme peut comprendre des particules céramiques ou carbone dans sa porosité. Ces particules peuvent avoir été introduites dans la préforme par immersion de la préforme dans une barbotine adéquate et séchage. Ces particules peuvent avantageusement améliorer l'infiltration par capillarité de la préforme par le métal fondu. En outre, ces particules peuvent, dans certains cas, réagir avec le métal fondu de façon à former une nouvelle composition de matrice dans la préforme (on parle alors de procédé du type « RMI » pour « Reactive Melt Infiltration »).

Un four destiné à être utilisé pour infiltrer une préforme poreuse par un métal fondu est décrit mais pas revendiqué, le four comprenant au moins :

- une préforme poreuse,
- un dispositif de mesure de la masse de la préforme,
- un creuset ayant un volume interne destiné à contenir un métal fondu, et
- un dispositif de déplacement apte à déplacer le creuset ou la préforme l'un par rapport à l'autre entre une première configuration dans laquelle la préforme est à l'extérieur du volume interne du creuset et une deuxième configuration dans laquelle la préforme est au moins partiellement présente dans ledit volume interne.

Un tel four est particulièrement adapté à la mise en œuvre du procédé décrit précédemment. En effet, le four est notamment remarquable en ce qu'il comprend un dispositif de mesure de la masse de la préforme permettant de déterminer le moment où elle peut être dégagée du métal fondu (valeur prédéterminée de masse atteinte). En outre, il comprend un dispositif de déplacement apte à déplacer relativement le creuset et la préforme. Ce dispositif peut permettre d'ajuster la distance entre la préforme et la surface libre du métal fondu et ainsi réguler la position relative du creuset par rapport à la préforme pour garder la préforme au contact du métal fondu, ou dégager la préforme du métal fondu.

Dans un exemple de réalisation, le dispositif de déplacement peut comprendre un vérin sur lequel est monté le creuset, la préforme étant maintenue fixe par rapport au four.

Dans un exemple de réalisation, le four peut comprendre en outre un système de contrôle de la position relative entre la préforme et le creuset configuré pour commander le dispositif de déplacement en fonction de l'évolution de la masse mesurée par le dispositif de mesure de la masse de la préforme.

Dans un exemple de réalisation, le dispositif de mesure de la masse de la préforme peut être une balance. La préforme peut en outre être suspendue à ladite balance.

Brève description des dessins

D'autres caractéristiques et avantages de la présente invention ressortiront de la description faite ci-dessous, en référence aux dessins annexés qui en illustrent des exemples de réalisation dépourvu de tout caractère limitatif. Sur les figures :

- la figure 1 est une vue schématique en coupe d'un four adapté à la mise en œuvre d'un procédé selon l'invention,
- la figure 2 est un ordinogramme montrant les étapes d'un exemple de procédé de fabrication d'une pièce en matériau CMC comprenant une infiltration par un procédé selon un mode de réalisation de l'invention, et

- les figures 3A à 3D illustrent chacune des étapes d'un procédé d'infiltration selon un mode de réalisation de l'invention.

Description détaillée de l'invention

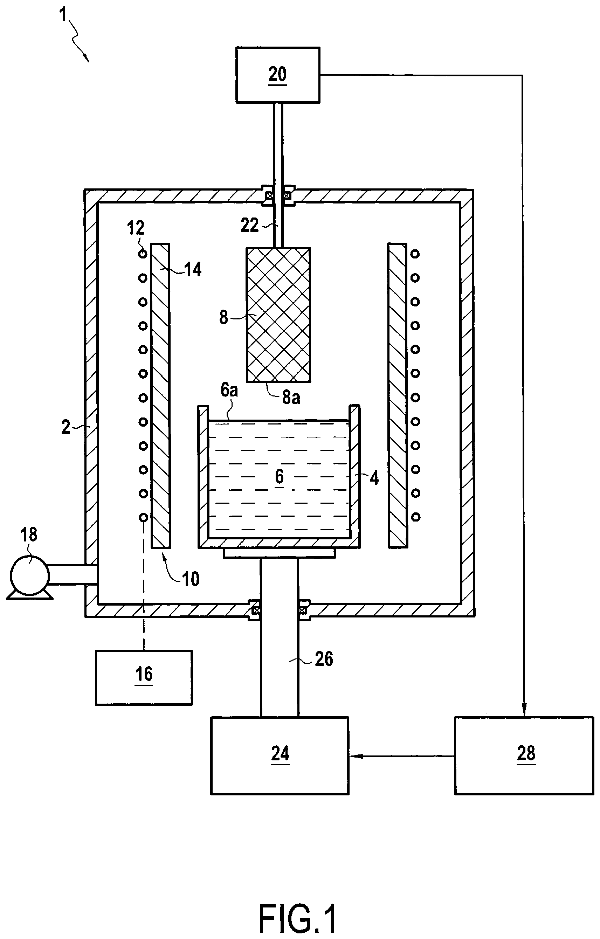

La figure 1 montre une vue en coupe d'un four 1 pouvant être utilisé dans un procédé d'infiltration selon l'invention. Le four 1 comprend une enceinte 2 hermétique à l'intérieur de laquelle sont présents un creuset 4 ayant un volume interne contenant un métal fondu 6, et une préforme poreuse 8.

Le creuset 4 peut être en un matériau céramique. Le métal fondu 6 peut par exemple être du silicium ou un alliage de silicium. La préforme poreuse 8 peut être une préforme fibreuse comprenant des fils céramiques ou carbone. Par exemple, la préforme fibreuse peut comprendre des fils de carbure de silicium. La préforme fibreuse peut être obtenue par exemple par tissage ou drapage de fils. Des exemples de fils en carbure de silicium utilisables peuvent être des fils « Nicalon », « Hi-Nicalon » ou « Hi-Nicalon-S » commercialisés par la société japonaise NGS. Les fils céramiques peuvent présenter une teneur en oxygène inférieure ou égale à 1% en pourcentage atomique. Les fils « Hi-Nicalon-S » présentent une telle caractéristique. Dans un procédé selon l'invention, on utilise de préférence les fils Hi-Nicalon-S.

Le four 1 est ici muni d'un système de chauffage par induction 10 comprenant une bobine d'induction 12 et un suscepteur 14 qui sont disposés autour du creuset 4 et de la préforme 8 dans l'enceinte 2 du four 1. Le système de chauffage comprend en outre, de façon connue, un générateur hautes fréquences 16 relié à la bobine 12 de façon à générer un champ magnétique variable à l'aide de la bobine 12. Le suscepteur 14 peut par exemple être un cylindre en graphite. Le four 1 peut en outre être muni d'une pompe à vide 18 en communication fluidique avec l'intérieur de l'enceinte 2, de façon à réaliser le procédé d'infiltration sous vide. On notera qu'un autre type de four que celui illustré peut être utilisé, en particulier le four peut comprendre un système de chauffage résistif au lieu d'un système inductif.

Pour réaliser le procédé selon l'invention, le four 1 comprend un dispositif de mesure de la masse de la préforme 8. Dans l'exemple illustré, ce dispositif est une balance 20, ici du type peson, à laquelle la préforme 8 est suspendue par le biais d'une tige 22. Dans cet exemple, la balance 20 est située à l'extérieur de l'enceinte 2 du four 1, au-dessus de l'enceinte 2. Bien entendu, d'autres dispositifs de mesure de masse peuvent être utilisés sans sortir du cadre de la présente invention.

Le four 1 comprend en outre un dispositif de déplacement comprenant ici un vérin 24 ayant une tige 26 sur laquelle est monté le creuset 4. Dans cet exemple, le vérin 24 est situé à l'extérieur de l'enceinte 2 du four 1, au-dessous de l'enceinte 2. De la sorte, le vérin 20 permet de déplacer le creuset 4 avec un mouvement de translation verticale à l'intérieur de l'enceinte 2 du four 1, notamment en direction de la préforme 8. Ainsi, le creuset 4 est mobile en translation verticale dans l'enceinte 2. Dans une variante non illustrée, le creuset peut être monté fixe dans le four, et la préforme peut être mobile en translation verticale.

Dans l'exemple illustré, le four 1 comprend également un système de contrôle 28 de la position relative entre la préforme et le creuset, qui est configuré pour commander le vérin 24 en fonction de l'évolution de la masse de la préforme 8 telle que mesurée par la balance 20. Ce système de contrôle 28 peut être par exemple un automate ou un ordinateur équipé d'une carte d'acquisition à entrées/sorties. Le système de contrôle 28 peut recevoir en entrée des signaux électriques provenant de la balance 20, et envoyer des signaux de commande en sortie au vérin 24.

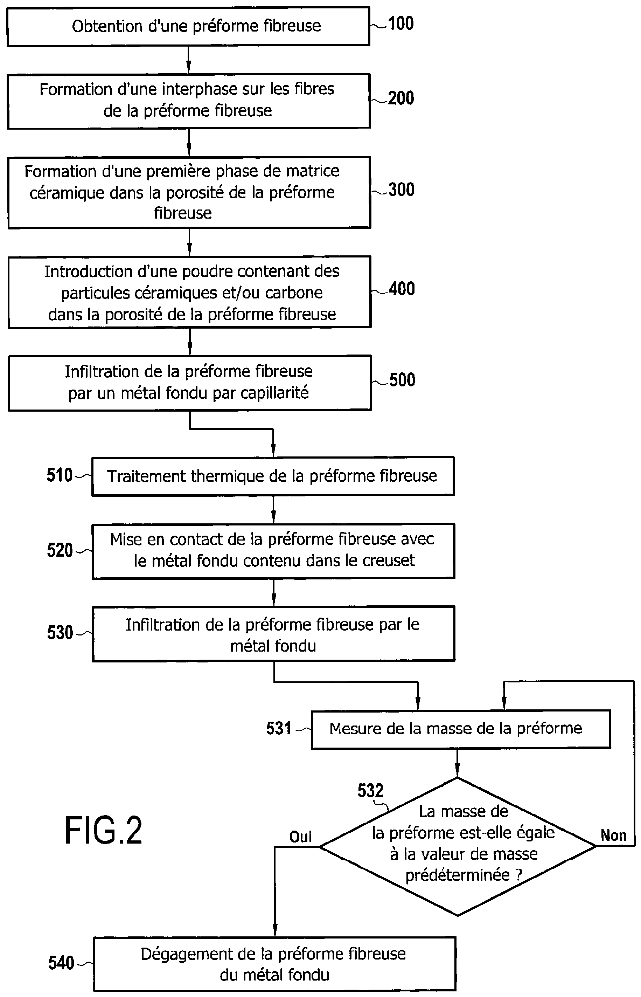

Un exemple de procédé de fabrication d'une pièce en matériau CMC comprenant une infiltration par un procédé selon un mode de réalisation de l'invention va maintenant être décrit en lien avec l'ordinogramme de la figure 2. A des fins d'illustration, la préforme poreuse 8 est, dans l'exemple décrit ci-après, une préforme fibreuse comprenant des fibres céramiques. On cherche ainsi à fabriquer une pièce en matériau CMC comprenant un renfort fibreux densifié par une matrice.

Une première étape 100 consiste tout d'abord à obtenir une préforme poreuse 8. De façon connue en soi, une préforme poreuse 8 peut être obtenue par exemple par tissage de fils céramiques, comprenant par exemple des fibres en carbure de silicium. Le tissage peut par exemple être un tissage tridimensionnel ou multi couches. Avant le tissage, une étape de traitement de surface des fils céramiques peut être réalisé pour notamment éliminer l'ensimage qui peut être présent sur les fibres.

Puis, dans une étape 200, on peut former sur les fibres une interphase de défragilisation. L'interphase peut être monocouche ou multicouches. L'interphase peut comporter au moins une couche de carbone pyrolytique (PyC), de nitrure de bore (BN), de nitrure de bore dopé au silicium (BN(Si), avec du silicium en une proportion massique comprise entre 5% et 40%, le complément étant du nitrure de bore) ou de carbone dopé au bore (BC, avec du bore en une proportion atomique comprise entre 5% et 20%, le complément étant du carbone). L'interphase a ici une fonction de défragilisation du matériau composite qui favorise la déviation de fissures éventuelles parvenant à l'interphase après s'être propagées dans la matrice, empêchant ou retardant la rupture de fibres par de telles fissures. En variante, on notera qu'il est possible de former l'interphase sur les fils céramiques avant le tissage de la préforme, c'est-à-dire avant mise en œuvre de l'étape 100.

On peut ensuite réaliser une étape 300 de formation d'une première phase de matrice céramique dans la porosité du renfort fibreux, sur l'interphase qui peut avoir été éventuellement formée au préalable ou directement sur les fils de la préforme poreuse. Cette étape 300 peut être une étape de pré densification de la préforme. Cette phase de matrice peut être formée par CVI. La première phase de matrice céramique peut par exemple comprendre du SiC. Le taux de porosité résiduelle de la préforme poreuse suite à cette étape 300 et avant introduction d'une poudre peut être supérieur ou égal à 30%, par exemple compris entre 30% et 35%. De manière générale, le taux de porosité résiduelle de la préforme après mise en œuvre de l'étape 200 est suffisant pour permettre l'introduction d'une poudre dans la porosité de la préforme et la formation d'une deuxième phase de matrice.

On réalise ensuite, lors de l'étape 400, l'introduction d'une poudre comprenant des particules en matériau céramique et/ou des particules en carbone dans la porosité résiduelle de la préforme poreuse. Pour ce faire, on peut imprégner la préforme poreuse à l'aide d'une composition, par exemple sous la forme d'une barbotine, introduite dans la porosité de la préforme par des méthodes connues en soi, par exemple par injection. Ladite composition peut comprendre la poudre en suspension dans un milieu liquide. Les particules en céramique peuvent être des particules de SiC, de $Si_3N_4$, de BN, de $SiB_6$, de $B_4C$, ou un mélange de telles particules. La taille ($D_{50}$) des particules de la poudre peut être inférieure ou égale à 5 $\mu$m, voire inférieure ou égale à 1 $\mu$m. Une fois la poudre introduite dans la préforme, par exemple par injection d'une barbotine, la préforme peut être séchée. Cette étape permet de fractionner la porosité à l'intérieur de la préforme afin d'améliorer l'infiltration qui sera réalisée dans l'étape suivante. En outre, cette étape peut permettre de former, par réaction chimique avec le métal d'infiltration, une nouvelle phase de matrice dans la porosité de la préforme.

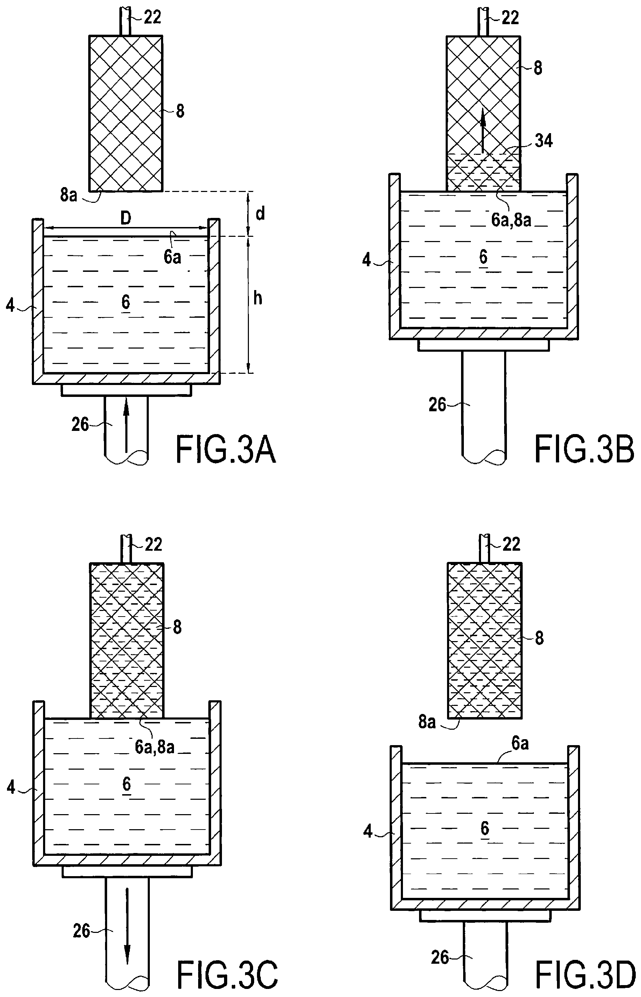

Puis, dans une étape 500, on réalise un procédé d'infiltration de la préforme 8 par un métal fondu selon un mode de réalisation de l'invention. L'infiltration de la préforme 8 peut permettre de densifier la préforme 8, en formant une deuxième phase de matrice à l'intérieur de sa porosité. Pour ce faire, on dispose la préforme poreuse 8 dans un four 1 tel que celui illustré précédemment. La figure 3A montre la préforme 8 suspendue à la balance 20 (non représentée sur cette figure) au-dessus du creuset 4 mobile. Le creuset 4 comprend un volume interne dans lequel est présent un métal 6. Le métal 6 peut par exemple être du silicium ou un alliage de silicium.

On procède, dans une sous-étape 510, à un traitement thermique de la préforme 8 à une température supérieure à la température du métal fondu qui servira à infiltrer la préforme 8. Ce traitement thermique permet de désoxyder la préforme 8 et de la préparer pour l'infiltration. Durant cette étape, la préforme 8 est séparée d'une distance $\underline{d}$ non nulle de la surface libre 6a du métal fondu 6 présent dans le creuset. Durant cette étape, le métal 6 dans le creuset est devenu liquide, et subit par la même occasion une désoxydation.

Puis, à l'étape 520, on met en contact la préforme 8 avec la surface libre 6a du métal fondu 6. Pour effectuer cette mise en contact, le vérin 24 est commandé par le système de contrôle 28 pour approcher le creuset 4, et donc la surface libre 6a du métal fondu 6 de la préforme 8 avec par exemple une vitesse d'approche constante. Il peut être avantageux de configurer le système de contrôle 28 pour arrêter l'approche du creuset 6 de la préforme 8 lorsque la balance 20 enregistre une variation soudaine et prédéterminée de la masse mesurée, signifiant qu'il y a eu contact entre la préforme 8 et le métal fondu 6. Ainsi, la face 8a de la préforme en regard du creuset 4 est au contact de la surface libre 6a du métal fondu 6.

A l'étape 530, l'infiltration de la préforme 8 par le métal fondu 6 a débuté. Du métal fondu monte à l'intérieur de la préforme 8 par capillarité de façon à remplir progressivement sa porosité libre : la montée capillaire du métal a débuté. Durant l'infiltration, le front 34 de métal fondu 6 se déplace depuis la face 8a et vers le haut de la préforme 8. Durant l'infiltration, la face 8a de la préforme 8 en regard du creuset 4 est au contact de la surface libre 6a du métal fondu.

Durant l'étape 530, la masse de la préforme 8 est mesurée en temps réel par la balance 20 (étape 531). Tant que la préforme 8 est infiltrée, sa masse augmente proportionnellement à la quantité de métal fondu 6 qui s'est infiltrée dans la porosité libre de la préforme 8. Selon l'évolution de la masse mesurée par la balance 8 (étape 532), le système de contrôle 28 peut commander le dégagement de la préforme 8 du métal fondu 6 (étape 540, figure 3D). Le dégagement de la préforme 8 du métal fondu 6 correspond ici à une translation du creuset 4 vers le bas, dans une direction opposée à la préforme 8. Après dégagement, la préforme 8 n'est plus au contact du métal fondu 6, et la préforme 8 et la surface libre 6a du métal fondu 6 sont séparées d'une distance non nulle (figure 3D).

Dans une première situation, le système de contrôle 28 peut avoir été configuré pour réaliser une infiltration complète de la préforme 8. Dans ce cas, le système de contrôle 28 peut être configuré pour dégager la préforme 8 du métal fondu 6 (étape 540) lorsque la masse de la préforme devient constante au cours du temps, c'est-à-dire lorsqu'elle atteint une valeur prédéterminée correspondant à la masse de la préforme 8 complètement infiltrée. Cette situation est illustrée sur la figure 3C.

Dans une deuxième situation non illustrée, le système de contrôle 28 peut avoir été configuré pour réaliser une infiltration partielle de la préforme 8. Dans ce cas, une valeur prédéterminée de masse est entrée dans le système de contrôle 28. Le système 28 peut alors commander le dégagement de la préforme 8 du métal fondu (étape 540) dès que la valeur prédéterminée de masse est atteinte.

Une fois l'infiltration terminée et la préforme 8 dégagée du métal fondu 6, on obtient une pièce en matériau CMC densifiée qui peut enfin être extraite du four 1.

On notera que, tout au long de l'étape 500 d'infiltration de la préforme 8 par le métal fondu 6, le système de contrôle 28 peut réguler la position relative du creuset 4 par rapport à la préforme 8 pour garder la préforme 8 au contact du métal fondu 6. En effet, au cours de l'infiltration, la hauteur h de métal fondu 6 à l'intérieur du creuset peut varier à cause de la quantité de métal fondu 6 qui a été transférée dans la préforme. Cette régulation peut être réalisée par le système de contrôle 28. Par exemple, on peut configurer le système de contrôle 28 pour qu'il prenne en compte une loi de variation de la hauteur du métal fondu 6 dans le creuset 4 ($\Delta h(t)$) en fonction de la variation de masse ($\Delta m(t)$) enregistrée par la balance 20 :

$$\Delta h(t) = \frac{\Delta m(t)}{\rho_{métal} \cdot S_{creuset}}$$

où $\rho_{métal}$ est la masse volumique du métal et $S_{creuset}$ la surface libre 6a du métal dans le creuset. Dans le cas d'un creuset 4 de forme cylindrique et de diamètre $\underline{D}$, on a $S_{creuset} = \pi \cdot (D/2)^2$. Ainsi, le système de contrôle 28 peut approcher le creuset 4 de la préforme 8 au cours de l'infiltration pour maintenir la préforme 8 au contact du métal fondu en suivant cette loi.

On notera que la régulation de la position relative du creuset par rapport à la préforme peut être optionnelle lorsque le creuset 4 et la préforme 8 présentent des dimensions telles que la variation $\Delta h(t)$ de la hauteur de métal fondu 6 dans le creuset 4 est négligeable pendant l'infiltration.

**Revendications**

1. Procédé d'infiltration d'une préforme poreuse (8) par un métal fondu (6), l'infiltration étant réalisée dans un four (1) comprenant un creuset (4) dans lequel est présent le métal fondu, le procédé comprenant :

   - la mise en contact de la préforme poreuse avec le métal fondu présent dans le creuset (étape 520),
   - l'infiltration de la préforme poreuse par le métal fondu par capillarité (étape 530),
   - la mesure de la masse de la préforme poreuse au cours de l'infiltration (étape 531), et

   - le dégagement de la préforme poreuse du métal fondu (étape 540) lorsque la masse de la préforme mesurée atteint une valeur prédéterminée (étape 532),

   le procédé comprenant en outre, avant mise en contact de la préforme poreuse (8) avec le métal fondu (6), un traitement thermique de la préforme poreuse à une température supérieure ou égale à la température de fusion du métal (étape 510).

2. Procédé selon la revendication 1, comprenant, au cours de l'infiltration, la régulation de la position relative du creuset (4) par rapport à la préforme (8) pour garder la préforme au contact du métal fondu (6).

3. Procédé selon la revendication 1 ou 2, dans lequel la préforme poreuse (8) est une préforme fibreuse obtenue par tissage de fils céramiques.

4. Procédé selon la revendication 3, dans lequel les fils sont en carbure de silicium.

5. Procédé selon l'une quelconque des revendications 1 à 4, dans lequel le métal fondu (6) est du silicium ou un alliage de silicium.

6. Procédé selon l'une quelconque des revendications 1 à 5, dans lequel, avant le traitement thermique de la préforme poreuse (étape 510), on réalise l'introduction (étape 400) d'une poudre comprenant des particules céramiques ou carbone dans la porosité résiduelle de la préforme poreuse.

7. Procédé selon la revendication 4, dans lequel les fils présentent une teneur en oxygène inférieure ou égale à 1% en pourcentage atomique.

**Patentansprüche**

1. Verfahren zum Infiltrieren eines porösen Vorformlings (8) mit einem geschmolzenen Metall (6), wobei die Infiltration in einem Ofen (1) durchgeführt wird, umfassend einen Tiegel (4), in dem das geschmolzene Metall vorhanden ist, das Verfahren umfassend:

- Inkontaktbringen des porösen Vorformlings mit dem geschmolzenen Metall, das in dem Tiegel vorhanden ist (Schritt 520),
- Infiltrieren des porösen Vorformlings durch das geschmolzene Metall durch Kapillarwirkung (Schritt 530),
- Messen der Masse des porösen Vorformlings während der Infiltration (Schritt 531), und
- Lösen des porösen Vorformlings von dem geschmolzenen Metall (Schritt 540), wenn die gemessene Masse des Vorformlings einen vorbestimmten Wert erreicht (Schritt 532),

das Verfahren ferner umfassend vor Inkontaktbringen des porösen Vorformlings (8) mit dem geschmolzenen Metall (6) eine Wärmebehandlung des porösen Vorformlings bei einer Temperatur gleich wie oder höher als die Schmelztemperatur des Metalls (Schritt 510).

2. Verfahren nach Anspruch 1, umfassend, während der Infiltration die Regulierung der relativen Position des Tiegels (4) in Bezug auf den Vorformling (8), um den Vorformling in Kontakt mit dem geschmolzenen Metall (6) zu halten.

3. Verfahren nach Anspruch 1 oder 2, wobei der poröse Vorformling (8) ein fasriger Vorformling ist, der durch Weben von keramischen Fäden erlangt wird.

4. Verfahren nach Anspruch 3, wobei die Fäden aus Siliziumkarbid sind.

5. Verfahren nach einem der Ansprüche 1 bis 4, wobei das geschmolzene Metall (6) Silizium oder eine Siliziumlegierung ist.

6. Verfahren nach einem der Ansprüche 1 bis 5, wobei vor der Wärmebehandlung des porösen Vorformlings (Schritt 510) ein Einbringen (Schritt 400) eines Pulvers, umfassend Keramik- oder Kohlenstoffpartikel, in die Restporosität des porösen Vorformlings durchgeführt wird.

7. Verfahren nach Anspruch 4, wobei die Fäden einen Sauerstoffgehalt von weniger als oder gleich wie 1 Atom-% aufweisen.

**Claims**

1. A method for the infiltration of a porous preform (8) by a molten metal (6), the infiltration being carried out in a furnace (1) comprising a crucible (4) wherein the molten metal is present, the method comprising:

- bringing the porous preform into contact with the molten metal present in the crucible (step 520),
- infiltration of the porous preform by the molten metal by capillarity (step 530),
- measuring the mass of the porous preform during infiltration (step 531), and
- removing the porous preform from the molten metal (step 540) when the measured mass of the preform reaches a predetermined value (step 532),

the method further comprising, before bringing the porous preform (8) into contact with the molten metal (6), a heat treatment of the porous preform at a temperature greater than or equal to the melting temperature of the metal (step 510).

2. The method according to claim 1, comprising, during infiltration, the regulation of the relative position of the crucible (4) relative to the preform (8) to keep the preform in contact with the molten metal (6).

3. The method according to claim 1 or 2, wherein the porous preform (8) is a fibrous preform obtained by weaving ceramic threads.

4. The method according to claim 3, wherein the threads are made of silicon carbide.

5. The method according to any one of claims 1 to 4, wherein the molten metal (6) is silicon or a silicon alloy.

6. The method according to any one of claims 1 to 5, wherein, before the heat treatment of the porous preform (step 510), the introduction (step 400) of a powder comprising ceramic or carbon particles into the residual porosity of the porous preform is carried out.

7. The method according to claim 4, wherein the threads present an oxygen content less than or equal to 1% in atomic percentage.

FIG.1

Obtention d'une préforme fibreuse — 100

Formation d'une interphase sur les fibres de la préforme fibreuse — 200

Formation d'une première phase de matrice céramique dans la porosité de la préforme fibreuse — 300

Introduction d'une poudre contenant des particules céramiques et/ou carbone dans la porosité de la préforme fibreuse — 400

Infiltration de la préforme fibreuse par un métal fondu par capillarité — 500

510 — Traitement thermique de la préforme fibreuse

520 — Mise en contact de la préforme fibreuse avec le métal fondu contenu dans le creuset

530 — Infiltration de la préforme fibreuse par le métal fondu

531 — Mesure de la masse de la préforme

**FIG.2**

Oui

532 — La masse de la préforme est-elle égale à la valeur de masse prédéterminée ?

Non

540 — Dégagement de la préforme fibreuse du métal fondu

FIG.3A

FIG.3B

FIG.3C

FIG.3D

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1683771 A1